# EUROPÄISCHE PATENTSCHRIFT

(11) **EP 1 826 777 B1**
(45) Veröffentlichungstag und Bekanntmachung des Hinweises auf die Patenterteilung: **27.04.2011**
(21) Anmeldenummer: 07002443.5
(22) Anmeldetag: 05.02.2007
(51) Int. Cl.: G21C 17/06, G01N 17/02

(54) **Verfahren zur Prüfung eines Brennstabhüllrohres sowie zugehörige Vorrichtung**
Method for testing a fuel rod cladding tube and apparatus therefor
Procédé de contrôle d'une gaine de barreau de combustible et dispositif destiné à sa mise en oeuvre

(30) Priorität: 27.02.2006 DE 102006009502
(43) Veröffentlichungstag der Anmeldung: 29.08.2007
(73) Patentinhaber: AREVA NP GmbH, 91052 Erlangen (DE)
(72) Erfinder: Model, Kilian, 96155 Buttenheim (DE); Müller, Christian, 96052 Bamberg (DE)
(74) Vertreter: Tergau & Pohl Patentanwälte

(56) Entgegenhaltungen:
- JP-A- 5 157 683
- JP-A- 11 173 970
- US-A- 3 666 869
- US-A- 4 425 193
- US-A- 5 625 656

## Beschreibung

Die Erfindung bezieht sich auf ein Verfahren zur Prüfung eines Brennstabhüllrohres. Sie betrifft weiterhin eine zur Durchführung des Verfahrens geeignete Vorrichtung.

Üblicherweise bestehen die Brennelemente eines Kernreaktors aus einem Bündel von Brennstäben. Jeder der Brennstäbe weist eine die äußere Umschließung bildende Brennstabhülle auf, die auch als Brennstabhüllrohr oder Hüllrohr bezeichnet wird und die in ihrem Inneren den angereicherten Kernbrennstoff, z. B. in Form gesinterten Urandioxid-Tabletten (pellets), enthält. Die Brennstabhülle soll den Kernbrennstoff vor dem die Brennelemente oder die Brennstäbe umströmenden Kühlmittel trennen und verhindern, dass die bei der Kernspaltung entstehenden Spaltprodukte in das Kühlmittel gelangen oder mit ihm in direkten Kontakt treten.

Bei wassermoderierten Kernreaktoren sind die Brennstabhüllrohre üblicherweise aus Zirkonium oder aus einer Zirkoniumlegierung gefertigt. Insbesondere kommen dabei Zirkalloy-Legierungen zum Einsatz, die neben Zirkonium als Hauptbestandteil auch noch geringe Mengen von Zinn, Eisen, Nickel, Chrom oder Niob enthalten können. Zirkonium ist vor allem wegen seiner vergleichsweise geringen Absorptionsquerschnitte für Neutronen, oder anders ausgedrückt, wegen seiner hohen Neutronenpermeabilität, aber auch aufgrund seiner hohen Temperaturbeständigkeit und guten Wärmeleitfähigkeit ein bei der Fertigung der Brennstabhüllen bevorzugtes Material.

Da die Brennstäbe beim Betrieb eines Kernreaktors ständig dem umgebenden Kühlmedium ausgesetzt sind, welches u. a. oxidierende Bestandteile enthält, ist eine zunehmende Korrosion der Zirkalloy-Oberflächen im Laufe der Zeit unvermeidlich. Dadurch ändern sich möglicherweise die strukturellen Eigenschaften des Hüllrohrmaterials. Die Korrosion ist damit einer der Vorgänge, welche die Einsatzzeit der Brennelemente im Reaktor auf etwa drei bis fünf Jahre begrenzen.

Wünschenswert wäre es, bereits vor dem bestimmungsgemäßen Einsatz eines Brennelementes im Kernreaktor fundierte Erkenntnisse und heuristische Erfahrungswerte bezüglich der Materialeigenschaften und des Korrosionsverhaltens möglicher Hüllrohrwerkstoffe unter den zu erwartenden Betriebsbedingungen zu erlangen.

Der Erfindung liegt daher die Aufgabe zugrunde, ein Verfahren zur Prüfung eines Brennstabhüllrohres anzugeben, das eine betriebsnahe Beurteilung seiner Korrosionseigenschaften ermöglicht. Es soll weiterhin eine zur Durchführung des Verfahrens besonders geeignete Vorrichtung angegeben werden.

Bezüglich des Verfahrens wird die Aufgabe gelöst, indem das Brennstabhüllrohr teilweise in ein Umgebungsmedium eingetaucht wird und von innen beheizt wird, wobei das Elektrodenpotential des Brennstabhüllrohres gegenüber einer Bezugselektrode gemessen wird und wobei anhand der Messdaten auf die Materialeigenschaften des Brennstabhüllrohres, nämlich auf seine Korrosionseigenschaften, geschlossen wird.

Der Erfindung liegt die Erkenntnis zugrunde, dass das Ausmaß der Korrosion hauptsächlich durch die Beschaffenheit des Materials, die Hüllrohrtemperatur und die chemische Zusammensetzung des umgebenen Kühlmediums bestimmt wird. Mit anderen Worten: Die Erfindung geht von der Überlegung aus, dass das Korrosionsverhalten eines Brennstabhüllrohres während des Reaktorbetriebes in besonderem Maße durch die elektrochemischen Vorgänge an seiner Oberfläche, d. h. durch die elektrochemische Wechselwirkung mit dem umgebenden Kühlmedium, beeinflusst wird. Insbesondere wurde dabei erkannt, dass auch schon ausgesprochen geringfügige Veränderungen in der chemischen Zusammensetzung des Kühlmediums auf subtile Weise messbare korrosive Effekte und strukturelle Veränderungen des Hüllrohrmaterials auslösen können. Ein besonders sensitiver Indikator für derartige Effekte ist das Elektrodenpotential des in einem flüssigen oder gasförmigem Umgebungsmedium eine Elektrode bildenden Brennstabhüllrohres gegenüber einer ebenfalls in das Umgebungsmedium eintauchenden, von der Messelektrode beabstandet angeordneten Bezugselektrode. Gemessen wird also das elektrochemische Potential bzw. die Potentialdifferenz zwischen den beiden Elektroden, welche durch die zwischen ihnen stattfindende lonenleitung im Umgebungsmedium und die Vorgänge an den Phasengrenzflächen beeinflusst wird. Im Falle eines flüssigen Umgebungsmediums mit darin gelösten beweglichen Ladungsträgern (Ionen) spricht man auch von einem Elektrolyten.

Gemäß dem der Erfindung zugrunde liegenden Konzept erfolgt nun weiterhin die Messung der Korrosionspotentiale nicht an dem im Betrieb befindlichen, d. h. im Reaktor installierten und mit Kernbrennstoff befüllten Brennstabhüllrohr, sondern in der Art einer Simulation an einem als Testobjekt oder Prüfling bereitgestellten Brennstabhüllrohr in einer dafür geeigneten Messvorrichtung oder in einem Teststand. Dabei können einerseits die für die Beurteilung des Korrosionsverhaltens wesentlichen betrieblichen Umgebungsbedingungen relativ leicht nachempfunden werden, andererseits kann - insbesondere wenn es in erster Linie auf den Einfluss der Kühlmittelchemie ankommt - auf eine Befüllung des Hüllrohres mit radioaktivem Kernbrennstoff in der Regel verzichtet werden. Dadurch wird die Durchführung systematischer Testreihen im Hinblick auf die notwendigen Sicherheitsvorkehrungen und behördlichen Vorschriften etc. wesentlich vereinfacht. Es können also durch eine Variation der Versuchsparameter vergleichsweise einfach und ohne eine Gefährdung der Umgebung oder des für den Teststand zuständigen Bedienpersonals eine Reihe von Betriebsszenarien "durchgespielt" werden, was im realen Reaktorbetrieb allein schon aufgrund der behördlichen Auflagen praktisch nicht möglich wäre.

Überdies wurde erkannt, dass sich eine besonders betriebsnahe Beurteilung des Korrosionsverhaltens des jeweiligen Hüllrohres verwirklichen lässt, wenn die im Realbetrieb durch die Erwärmung des Kernbrennstoffs hervorgerufene Aufheizung des Hüllrohres ersatzweise durch eine im Rohrinneren angebrachte Heizeinrichtung bewirkt wird. Das heißt, die Messung des Elektrodenpotentials berücksichtigt auch den Wärmeübergang vom Inneren des Hüllrohres an das äußere umgebende Medium.

Vorteilhafterweise wird die chemische Zusammensetzung des Umgebungsmediums derart gewählt, das sie der Zusammensetzung des Kühlmediums in einem Kernreaktor gleicht oder ähnlich ist. Insbesondere wird zweckmäßigerweise als Umgebungsmedium Wasser oder Wasserdampf verwendet, in das ein oder mehrere Gase eingeleitet werden, die auch beim Betrieb eines Kernreaktors im Kühlmedium gelöst oder vorhanden sind oder während bestimmter Betriebszustände anfallen können. Durch eine systematische Variation der chemischen Zusammensetzung des Umgebungsmediums und durch eine Beaufschlagung mit unterschiedlichen Gasen kann der Einfluss verschiedener Wasserchemiebedingungen auf die Materialkorrosion messtechnisch erfasst und anschließend anhand der aufgenommenen Messdaten ausgewertet und beurteilt werden. Diese Erkenntnisse können dann bei der Auslegung, Konzeption, Planung und Ausführung der Hüllrohre an sich sowie ggf. weiterer Reaktorkomponenten und bei der Wahl der Betriebsparameter etc. in angemessener Weise be rücksichtigt werden.

Bei den in das Umgebungsmedium eingeleiteten Gasen kann es sich beispielsweise um Wasserstoff (H₂), Sauerstoff (O₂), Stickstoff (N₂) oder um Argon (Ar) handeln. Alternativ oder zusätzlich können dem Umgebungsmedium auch andere Additive, z. B. Flüssigkeiten oder lösbare Feststoffe oder Emulsionen etc. zugesetzt werden.

Zur Schaffung besonders realitätsnaher Simulationsbedingungen werden vorzugsweise der Druck und die Temperatur des Umgebungsmediums im Druckbehälter derart eingestellt, dass sie den Betriebsbedingungen im Reaktordruckbehälter eines Druckwasserreaktors oder im Reaktorbecken eines Siedewasserreaktors entsprechen. Insbesondere interessieren die Korrosionsvorgänge in einem Siedewasserreaktor, so dass vorteilhafterweise die dort herrschenden Betriebsbedingungen eingestellt werden.

Vorteilhafterweise steht das Umgebungsmedium dabei im Druckbehälter des Teststandes nicht still, sondern durchströmt denselbigen, wobei die Strömung zwischen der Einlassseite und der Auslassseite zweckmäßigerweise derart eingestellt wird, dass sie hinsichtlich der Durchsatzrate, der Strömungsrichtung relativ zum Brennstabhüllrohr und ggf. in Bezug auf weitere Kriterien die Strömungsverhältnisse im Reaktorbecken eines Kernreaktors nachbildet.

Vorteilhafterweise wird zur Durchführung der Messung die Heizleistung der das Brennstabhüllrohr von innen beheizenden Heizeinrichtung derart eingestellt, dass sie derjenigen Heizleistungen entspricht, die beim Betrieb eines Kernreaktors von einem innerhalb des Brennstabhüllrohres befindlichen nuklearen Brennstoff freigesetzt wird. Damit werden hinsichtlich der Temperaturverhältnisse und des Wärmedurchgangs durch das Brennstabhüllrohr besonders realistische und betriebsnahe Testbedingungen geschaffen.

Hinsichtlich der Vorrichtung wird die eingangs genannte Aufgabe gelöst durch eine Vorrichtung zur Messung des Elektrodenpotentials eines Brennstabhüllrohres
- mit einem eine Durchführungsöffnung in der Behälterwand aufweisenden und mit einem Umgebungsmedium befüllbaren Druckbehälter, wobei das Brennstabhüllrohr durch die Durchführungsöffnung hindurch in den Druckbehälter einführbar ist,
- mit einer im Rohrinnenraum des Brennstabhüllrohres angeordneten Heizeinrichtung, und
- mit einem elektrisch isolierender Dichtkörper, der zwischen dem Brennstabhüllrohr und der Behälterwand angeordnet ist.

Bei dieser Konstruktion taucht das Brennstabhüllrohr nach dem Einführen somit nur teilweise in den mit Umgebungsmedium befüllten, druck- und temperaturführenden Innenraum des Druckbehälters ein, während der nach außen herausragende Abschnitt des Brennstabhüllrohres auch während des Simulations- und Messvorganges gut zugänglich ist. Insbesondere lässt sich die zur Beheizung des Brennstabhüllrohres vorgesehene Heizeinrichtung von außen in das Rohr einführen und bei Bedarf auch leicht auswechseln, ohne dass der auch als Autoklav bezeichnete Druckbehälter zu diesem Zweck geöffnet oder demontiert werden müsste. Der zwischen dem Brennstabhüllrohr und der Wand des Autoklaven befindliche Dichtkörper hat eine Doppelfunktion: Einerseits dichtet er den Zwischenraum gegen das Austreten von ggf. unter hohem Druck stehenden Umgebungsmedium aus dem Behälterinneren ab. Andererseits dient er zur elektrischen Isolierung des Brennstabhüllrohres von den umliegenden, metallischen Bauteilen des Druckbehälters, wodurch eine unverfälschte, verlässliche Messung des am Rohr anliegenden elektrischen Potentials überhaupt erst ermöglicht ist.

In einer besonders vorteilhaften Ausführung ist als Dichtkörper ein ringförmiger oder als Hohlzylinder ausgebildeter Tefloneinsatz vorgesehen. Wie sich herausgestellt hat, erfüllt das auch als Teflon bekannte Polytetrafluorethylen die bezüglich der Dichtwirkung und der elektrischen Isolierung gestellten Anforderungen in besonders günstiger Weise. Teflon ist zudem ausgesprochen reaktionsträge und beständig gegenüber den meisten Säuren, Basen sowie sonstigen chemisch aggressiven Additiven, die dem Umgebungsmedium im Inneren des Druckbehälters möglicherweise beigesetzt werden. Teflon hat außerdem einen vergleichsweise geringen Reibungskoeffizienten, was bei gleichzeitig hoher Dichtwirkung das Einführen des Brennstabhüllrohres erleichtert. Durch die mechanische Klemmwirkung der Dichtungseinfassung sitzt das Brennstabhüllrohr sicher und fest in der Ausnehmung des Druckbehälters. Weitere Haltemittel, die durch ihre Kontaktpotentiale zu unerwünschten Potentialverschiebungen im Hüllrohr führen könnten, sind nicht erforderlich.

Um auch von der Beheizungsseite herrührende Potentialverschiebungen sicher ausschließen zu können, ist die im Rohrinneren angeordnete elektrische Heizeinrichtung vorteilhafterweise über einen Trenntransformator oder über eine Serienschaltung von Trenntransformatoren galvanisch vom primären Heizstromkreis entkoppelt (potentialfreie Heizung).

In weiterer zweckmäßiger Ausgestaltung umfasst die Messvorrichtung einen am Brennstabhüllrohr fixierten und mit einem ersten Eingang eines Potential- oder Spannungsmessgerätes verbundenen elektrischen Anschlusskontakt zum Abgriff des Elektrodenpotentials. Vorteilhafterweise ist der elektrische Anschlusskontakt an dem aus dem Druckbehälter herausragenden Teilstück des Brennstabhüllrohres fixiert. Er kann beispielsweise als lösbarer Klemmkontakt ausgestaltet sein. Weiterhin sind zweckmäßigerweise eine oder mehrere Bezugselektroden beabstandet von dem Brennstabhüllrohr im Inneren des Druckbehälters angeordnet, deren Anschlussleitungen jeweils vorteilhafterweise durch in der Behälterwand vorgesehene, mit temperaturbeständigem und elektrisch isolierendem Kunststoff abgedichtete Durchführungsöffnungen nach außen geführt sind. Sie sind mit einem zweiten Eingang des außerhalb vom Druckbehälter positionierten Potential- oder Spannungsmessgerätes verbunden. Gemessen wird also die elektrische Spannung zwischen dem als Arbeitselektrode wirksamen Brennstabhüllrohr und jeweils einer der Bezugselektroden.

In zweckmäßiger Weiterbildung der Erfindung ist als Heizeinrichtung eine auswechselbar in das Brennstabhüllrohr einführbare Heizpatrone, vorzugsweise eine Hochleistungsheizpatrone mit einer Auslegungsleistung von etwa 75 Watt/cm² vorgesehen. Damit lassen sich Wärmestromdichten erzielen, die mit denen beim Einsatz des Brennstabhüllrohres in einem Kernreaktor vergleichbar sind.

Um auch bei längerem Heizbetrieb ein "Zusammenbacken" von Heizpatrone und Brennstabhüllrohr zu vermeiden, ist zwischen der Heizpatrone und dem Brennstabhüllrohr vorteilhafterweise ein in der Art eines Hohlzylinders oder eines Rohres gestalteter Silbereinsatz angeordnet. Dadurch ist eine vergleichsweise lange Heizpatronenlebensdauer gewährleistet. Durch die hohe thermische Leitfähigkeit von Silber ist ein guter Wärmeübergang von der Heizpatrone auf das zu beheizende Hüllrohr sichergestellt.

Weiterhin weist der Druckbehälter der Messanordnung einen strömungsseitigen Einlass und einen Auslass für das das Brennstabhüllrohr umströmende Umgebungsmedium auf. Einlassseitig wird das Umgebungsmedium von einer externen Pumpe mit dem vorgesehenen Betriebsdruck beaufschlagt und durch eine externe Vorwärmeinrichtung auf die vorgesehene Einlasstemperatur gebracht. Beim Umströmen des von innen beheizten Brennstabhüllrohres heizt sich das Umgebungsmedium weiter auf und verlässt anschließend den Druckbehälter über die dafür vorgesehene Auslassöffnung.

Weiterhin ist in dem Inneren des Druckbehälters eine Anzahl von längs dem Brennstabhüllrohr verteilt angeordneten Temperaturmessfühlern vorgesehen, die zur Kontrolle des mediumseitigen Temperaturprofils dienen. Vorzugsweise handelt es sich bei den Temperaturmessfühlern um Thermoelemente. Sie sind bevorzugt in der Nähe der Ausströmung angeordnet, um so den Einfluss der Hüllrohrbeheizung, sprich die Wärmeübertragung auf das Umgebungsmedium, erfassen zu können.

Die mit der Erfindung erzielten Vorteile bestehen insbesondere darin, dass die Korrosionspotentiale von Brennstabhüllrohren unter betriebsnahen Bedingungen, d. h. bei Wärmeübergang auf das umgebende Hochtemperaturkühlmedium und bei unterschiedlicher chemischer Zusammensetzung des Kühlmediums, mit großer Genauigkeit und unter weitgehender Vermeidung störender Sekundäreffekte gemessen werden könne. Auf der Grundlage der derart ermittelten Messdaten ist eine betriebsnahe Beurteilung des (Langzeit-)Korrosionsverhaltens der Hüllrohre möglich.

Ein Ausführungsbeispiel der Erfindung wird anhand einer Zeichnung näher erläutert. Darin zeigen:
- Figur 1: eine Prüf- und Messvorrichtung für ein Brennstabhüllrohr, und
- Figur 2: ein mit Hilfe der Prüf- und Messvorrichtung aufgenommenes Messwertdiagramm.

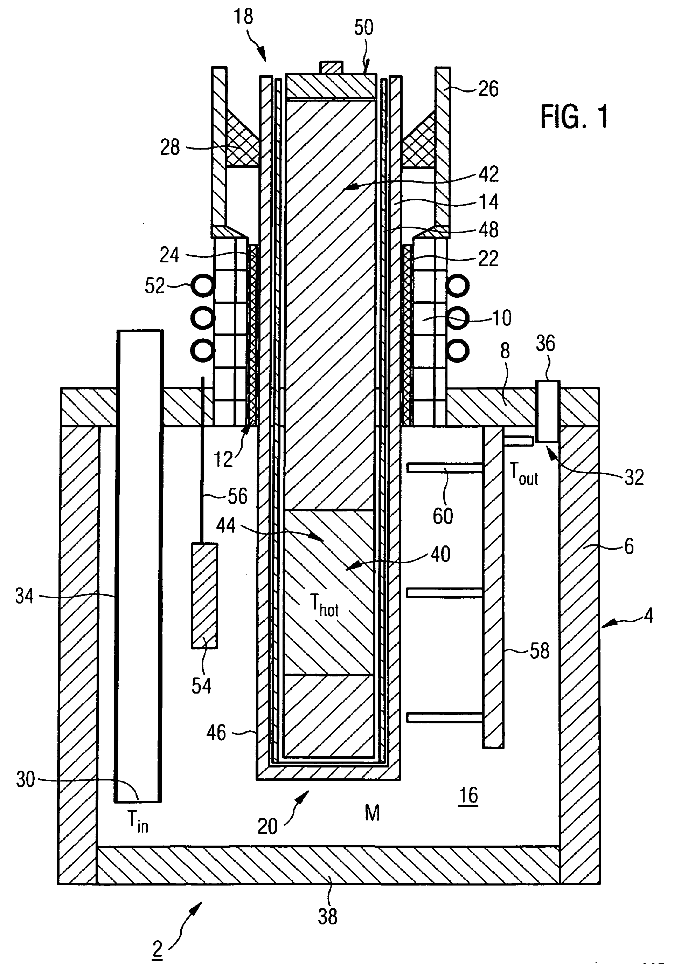

Die in Figur 1 dargestellte Prüf- und Messvorrichtung 2 weist einen auch als Autoklav bezeichneten Druckbehälter 4 mit einer druckstabilen und thermisch isolierenden Behälterwand 6 aus einem hochlegierten Stahl, hier X6CrNiMoTi: 17-12-2, auf. An der Oberseite des Druckbehälters 4 ist ein über die Deckelplatte 8 hinausragender Einschubstutzen 10 vorgesehen, durch dessen zylindrische Ausnehmung 12 oder Durchführungsöffnung ein Brennstabhüllrohr 14 in die in Figur 1 gezeigte Messposition in den Behälterinnenraum 16 des Druckbehälters 4 einführbar ist. Im Ausführungsbeispiel ragt das aus Zirkalloy gefertigte, am oberen Ende 18 offene und am unteren Ende 20 geschlossene Brennstabhüllrohr 14 ungefähr mit der Hälfte seiner Länge in den Innenraum 16 des Druckbehälters 4 ein. Der sich nach oben hin anschließende Abschnitt des Brennstabhüllrohres 14 wird von dem Einschubstutzen 10 eingefasst, wobei zwischen dem Brennstabhüllrohr 14 und der Innenfläche 22 des Einschubstutzens 10 ein Dichtkörper 24 angeordnet ist. Der als Hohlzylinder gestaltete Dichtkörper 24 besteht aus Polytetrafluorethylen, welches auch unter dem Handelsnamen Teflon bekannt ist. Damit ist einerseits eine hohe, auch gegenüber chemisch vergleichsweise aggressiven Medien im Behälterinnenraum 16 beständige Dichtwirkung sichergestellt, andererseits ist das zu untersuchende Brennstabhüllrohr 14 durch den Tefloneinsatz 24 von der Behälterwand 6 elektrisch isoliert.

Der Innendurchmesser des Tefloneinsatzes 24 ist derart auf den Außendurchmesser des Brennstabhüllrohres 14 abgestimmt, dass das Brennstabhüllrohr 14 bei Zimmertemperatur vergleichsweise einfach und ruckfrei in den Druckbehälter 4 eingeschoben werden kann, was durch den geringen Reibungskoeffizienten von Teflon noch unterstützt wird. Infolge betriebsbedingter Erwärmung der Prüfvorrichtung 2 bzw. des Hüllrohres 14 und infolge der dadurch hervorgerufenen Wärmeausdehnung stellt sich eine Klemmwirkung ein, durch die das Brennstabhüllrohr 14 während der Untersuchung sicher im Einschubstutzen 10 fixiert wird, ohne dass es dazu weiterer Arretiermittel bedarf. An den Einschubstutzen 10 schließt sich nach oben hin noch ein zylindrisches oberes Teilstück 26 mit innen liegenden, elektrisch isolierenden Fixierelementen 28 aus Teflon an, die das Brennstabhüllrohr 14 am oberen Ende 18 zusätzlich stabilisieren.

Der Druckbehälter 4 weist weiterhin einen Einlass 30 und einen Auslass 32 für ein flüssiges oder dampfförmiges Umgebungsmedium M auf, das den Behälterinnenraum 16 im Betriebsfall vollständig ausfüllt und dabei in elektrochemische und thermische Wechselwirkung mit dem Brennstabhüllrohr 14 tritt. Im Ausführungsbeispiel beträgt das Fassungsvermögen des Druckbehälters rund 1,1 I. Das Umgebungsmedium M gleicht in seiner chemischen Zusammensetzung dem Kühlmedium im Reaktorbecken eines Siedewasserreaktors, besteht also im Wesentlichen aus Wasser, dem zu Testzwecken verschiedene Additive, z. B. auch in Form von gelösten Gasen, beigemengt sein können. Während des Prüf- und Messvorganges ist eine kontinuierliche Umströmung des Brennstabhüllrohres 14 bei definierten Umgebungsbedingungen, die denen in einem Siedewasserreaktor ähnlich sind, vorgesehen. Dazu wird über den Einlass 30 kontinuierlich temperiertes und unter Druck stehendes Umgebungsmedium M in das Behälterinnere 16 eingeleitet, welches nach seiner Wechselwirkung mit dem Brennstabhüllrohr 14 durch den Auslass 32 wieder ausströmt. Das Umgebungsmedium M weist eine Einlasstemperatur Tᵢₙ von rund 280 °C auf, und die Durchflussrate beträgt ca. 7 bis 8 l/h. Der Betriebsdruck im Behälterinnenraum 16 beträgt etwa 87 bar, maximal jedoch etwa 95 bar. Die zur Druckerzeugung, zur Vorwärmung und zur chemischen Aufbereitung des Umgebungsmediums M notwendigen Anlagenkomponenten und Regelungseinheiten sind außerhalb der Messvorrichtung 2 angeordnet und hier nicht gezeigt. Es kann vorgesehen sein, das Umgebungsmedium M in einem Kreislauf zu führen.

Im Ausführungsbeispiel sind je ein Einlassrohr 34 und ein Auslassrohr 36 durch den Behälterdeckel bzw. die Deckelplatte 8 des Autoklaven geführt, wobei das Einlassrohr 34 wesentlich tiefer in den Druckbehälter 4 eintaucht als das Auslassrohr 36. Der Einlass 30 für das Umgebungsmedium M liegt also etwa auf dem Niveau des Behälterbodens 38, während die Ausströmung bzw. der Auslass 32 in der Nähe des Behälterdeckels 8 erfolgt. Damit besitzt die Strömung im Behälterinneren 16 sowohl eine vertikale als auch eine horizontale Komponente, was auch in etwa den Strömungsverhältnissen in einem Siedewasserraktor entspricht.

Um das Korrosionsverhalten des Brennstabhüllrohres 14 unter besonders realistischen, einsatznahen Bedingungen erfassen und beurteilen zu können, ist überdies eine elektrische Heizeinrichtung 40 im Rohrinnnenraum angeordnet. Es handelt sich dabei um eine vom frei zugänglichen oberen Ende 18 des Brennstabhüllrohres 14 her in selbiges einführbare zylindrische Hochleistungsheizpatrone 42 (sog. Hotfinger). Im Bereich der Heizzone 44 erfolgt eine Beheizung des in den Druckbehälter 4 hineinragenden Abschnitts des Brennstabhüllrohres 14 mit einer Flächenheizleistung von bis 75 W/cm². Damit stellt sich innerhalb der Heizzone 44 ein Wärmefluss vom Rohrinneren durch die Rohrwand 46 auf das äußere Umgebungsmedium M ein, das mithin als Kühlmedium wirksam ist. Die Temperaturverhältnisse und Wärmestromdichten sind derart gewählt, dass sie einer Beheizung des Brennstabhüllrohres 14 durch nuklearen Brennstoff in einem Kernreaktor entsprechen. Oberhalb und unterhalb der Heizzone 44 schließen sich unbeheizte und daher vergleichsweise kühlere Zonen an. Zwischen der Rohrinnenwand und der Heizpatrone 42 befindet sich ein Silberrohr 48, das als passgenaues Adapterbauteil ausgeführt ist und dabei zum einen einen intensiven und möglichst verlustfreien Wärmeübergang sicherstellt, zum anderen ein "Zusammenbacken" von Heizpatrone 42 und Brennstabhüllrohr 14 verhindert.

Eine für die Beurteilung des Korrosionsverhaltens besonders geeignete Messgröße ist das Elektrodenpotential des als Elektrode wirksamen Brennstabhüllrohres 14. Durch den oben geschilderten Aufbau der Prüf- und Messvorrichtung 2 ist es möglich, das Elektrodenpotential betriebsnah bei relativ hohem Druck und hoher Temperatur des umgebenden Kühlmediums und bei verschiedenen Wasserchemiebedingungen zu messen. Die elektrisch isolierende Halterung des Brennstabhüllrohres 14 innerhalb der Tefloneinfassung 24 verhindert dabei unkontrollierbare, die Auswertung der Messwerte erschwerende Potentialverschiebungen. Aus dem gleichen Grund sind die innerhalb der Heizpatrone 42 befindlichen Heizspulen (nicht dargestellt) über eine Serienschaltung von Trenntransformatoren galvanisch vom primären Heizstromkreis entkoppelt. Das Elektrodenpotential des Brennstabhüllrohres 14 wird über einen Anschlusskontakt 50 abgegriffen, der mit dem aus dem Druckbehälter 4 bzw. aus dem Einschubstutzen 10 herausragenden Teilstück des Brennstabhüllrohres 14 verbunden ist. Da die metallische Oberfläche der Heizpatrone 42 über das Silberrohr 48 elektrisch leitend mit dem Brennstabhüllrohr 14 verbunden ist, also auf dem gleichen elektrischen Potential liegt, kann der Anschlusskontakt 50, wie in Figur 1 dargestellt, auch an der Heizpatrone 42 befestigt sein. Des Weiteren wird der Einschubstutzen 10 an seiner Außenseite durch eine Kühlvorrichtung 52, in der ein Kühlmittel zirkuliert, gekühlt. Damit wird verhindert, dass sich der Tefloneinsatz 24 während des Betriebes zu stark erwärmt und durch Fließen des Teflons seine Dichtwirkung verliert.

Da das Elektrodenpotential immer nur relativ zu einer Bezugselektrode gemessen werden kann, sind weiterhin mehrere derartiger Bezugselektroden 54 im Innenraum des Druckbehälters 4 angeordnet, von denen schematisch eine in Figur 1 dargestellt ist. Die durch den Behälterdeckel 8 hindurchgeführten Anschlussleitungen 56 sind von diesem elektrisch isoliert. Die zur Kabeldurchführung vorgesehenen Durchtrittsöffnungen sind dabei in der Art einer Quetschverbindung mit einem temperaturbeständigen, elektrisch isolierenden Kunststoff abgedichtet. Es ist auch möglich, die Behälterwand 6 selbst als Bezugselektrode zu verwenden. Gemessen wird jeweils die elektrische Spannung zwischen dem als Arbeitselektrode wirksamen Brennstabhüllrohr 14 und einer der Bezugselektroden 54.

Schließlich sind an einem in der Nähe des Umgebungsmedium-Auslasses 32 montierten, senkrecht verlaufenden Trägerstab mehrere Thermoelemente 60 befestigt, die das auslassseitige Temperaturprofil (bezogen auf die Höhe bzw. die Längsausdehnung des Brennstabhüllrohres 14) und somit den Einfluss der Rohrbeheizung auf die Temperatur des Umgebungsmediums M erfassen. Die mit den Thermoelementen 60 Signalleitungen sind ebenfalls gegenüber der Behälterwand 6 elektrisch isoliert.

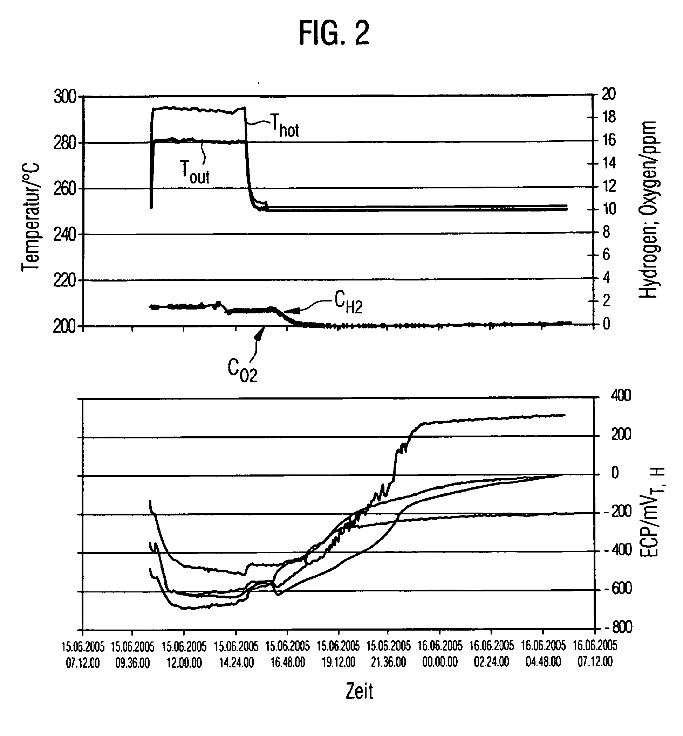

In Figur 2 sind exemplarisch die Resultate der über einen Zeitraum von 24 h hinweg vorgenommenen Messungen an einem Brennstabhüllrohr 14 aus Zirkonium dargestellt. Im oberen Diagramm sind zum einen der Temperaturverlauf innerhalb der Heizzone 44, d. h. die Hotfinger-Temperatur Tₕₒₜ, und die auslasseitige Temperatur Tₒᵤₜ des Umgebungsmediums M als Funktion der Zeit dargestellt. Für diese beiden Kurven gilt die Ordinatenbeschriftung links im Diagramm. Im Zeitraum von etwa 10:00 bis 15:00 Uhr des Messtages erfolgte eine Beheizung des Brennstabhüllrohres auf eine annähernd konstante Temperatur von ungefähr 295 °C, wodurch sich die Auslasstemperatur Tₒᵤₜ des Umgebungsmediums M bei etwa 290 °C einpendelte. Anschließend wurde die Heizeinrichtung 40 ausgeschaltet und gleichzeitig der durch die Vorheizung des Mediums M bestimmte Wert der Einlasstemperatur Tᵢₙ von anfänglich 280 °C auf 250 °C zurückgefahren. Dadurch fiel auch die auslasseitige Temperatur Tₒᵤₜ des Umgebungsmediums M auf einen Wert von rund 250 °C zurück. Zum anderen sind in dem gleichen Diagramm noch der zeitliche Verlauf der im Umgebungsmedium M vorherrschenden Sauerstoffkonzentration c_{O2} und der Wasserstoffkonzentration c_{H2} (gemessen im ppm) eingetragen; hierfür gilt die rechte Ordinate. Während der Rohrbeheizungsphase wurde Wasserstoff in das Umgebungsmedium M eingeleitet, so dass die Konzentration des Wasserstoffs gegenüber dem Sauerstoff erhöht war. Nach der Beheizung fiel der Wert der Wasserstoffkonzentration rasch wieder ab.

Im unteren Diagramm von Figur 2 ist für den gleichen Zeitabschnitt wie im obigen Diagramm der Verlauf des am Brennstabhüllrohr 14 anliegenden Elektrodenpotentials (ECP), gemessen in mV, dargestellt. Dabei wurden simultan vier verschiedene Potentialverläufe, gemessen jeweils gegenüber verschiedenartigen Bezugselektroden 54, aufgenommen. Anhand derartiger Messkurven kann der kundige Fachmann Rückschlüsse darauf ziehen, welches Hüllrohrmaterial unter bestimmten Umgebungsbedingungen besser geschützt ist als andere und sich somit für einen Einsatz in einen Kernreaktor besonders gut geeignet.

### Bezugszeichenliste

- 2: Mess- und Prüfvorrichtung
- 4: Druckbehälter
- 6: Behälterwand
- 8: Deckelplatte
- 10: Einschubstutzen
- 12: Ausnehmung/Durchführung
- 14: Brennstabhüllrohr
- 16: Behälterinnenraum
- 18: oberes Ende
- 20: unteres Ende
- 22: Innenfläche
- 24: Dichtkörper / Tefloneinsatz
- 26: oberes Teilstück
- 28: Fixierelement
- 30: Einlass
- 32: Auslass
- 34: Einlassrohr
- 36: Auslassrohr
- 38: Behälterboden
- 40: Heizeinrichtung
- 42: Heizpatrone
- 44: Heizzone
- 46: Rohrwand
- 48: Silberrohr
- 50: Anschlusskontakt
- 52: Kühlvorrichtung
- 54: Bezugselektrode
- 56: Anschlussleitung
- 58: Trägerstab
- 60: Thermoelement

- c_{H2}: Wasserstoffkonzentration
- c_{O2}: Sauerstoffkonzentration
- M: Umgebungsmedium
- Tₕₒₜ: Hotfinger-Temperatur
- Tᵢₙ: Einlasstemperatur
- Tₒᵤₜ: Auslasstemperatur

## Patentansprüche

1. Verfahren zur Prüfung eines Brennstabhüllrohres (14), bei dem das Brennstabhüllrohr (14) teilweise in ein Umgebungsmedium (M) eingetaucht wird und von innen beheizt wird, wobei das Elektroden potential des Brennstabhüllrohres (14) gegenüber einer Bezugselektrode (54) gemessen wird, und wobei anhand der Messdaten auf die Materialeigenschaften des Brennstabhüllrohres (14), nämlich auf seine Korrosionseigenschaften, geschlossen wird.

2. Verfahren nach Anspruch 1, bei dem die chemische Zusammensetzung des Umgebungsmediums (M) derart gewählt wird, dass sie der Zusammensetzung des Kühlmediums in einem Kernreaktor gleicht oder ähnlich ist.

3. Verfahren nach Anspruch 1 oder 2, bei dem als Umgebungsmedium (M) eine wässrige Flüssigkeit verwendet wird, in die ein oder mehrere Gase eingeleitet werden, die auch beim Betrieb eines Kernreaktors im Kühlmedium vorhanden sind oder anfallen können.

4. Verfahren nach einem der Ansprüche 1 bis 3, bei dem der Druck und die Temperatur des Umgebungsmediums (M) derart eingestellt werden, dass sie den Betriebsbedingungen im Reaktordruckbehälter eines Kernreaktors entsprechen.

5. Verfahren nach einem der Ansprüche 1 bis 3, bei dem eine Strömung des Umgebungsmediums (M) derart eingestellt wird, dass sie die Strömungsverhältnisse am Brennstabhüllrohr (14) eines Kernreaktors nachbildet.

6. Verfahren nach einem der Ansprüche 1 bis 5, bei dem die Heizleistung der das Brennstabhüllrohr (14) von innen beheizenden Heizeinrichtung (40) derart eingestellt wird, dass sie derjenigen Heizleistung entspricht, die beim Betrieb eines Kernreaktors von einem innerhalb des Brennstabhüllrohres (14) befindlichen nuklearen Brennstoff freigesetzt wird.

7. Vorrichtung zur Messung des Elektrodenpotentials eines Brennstabhüllrohres (14)
- mit einem eine Durchführungsöffnung (12) in der Behälterwand (6) aufweisenden und mit einem Umgebungsmedium (M) befüllbaren Druckbehälter (4), wobei das Brennstabhüllrohr (14) durch die Durchführungsöffnung (12) hindurch in den Druckbehälter (4) einführbar ist,
- mit einer im Rohrinnenraum (16) des Brennstabhüllrohres (14) angeordneten Heizeinrichtung, und
- mit einem elektrisch isolierender Dichtkörper (24), der zwischen dem Brennstabhüllrohr (14) und der Behälterwand (6) angeordnet ist.

8. Vorrichtung nach Anspruch 7, bei der als Dichtkörper (24) ein ringförmiger oder als Hohlzylinder ausgebildeter Tefloneinsatz vorgesehen ist.

9. Vorrichtung nach Anspruch 7 oder 8, deren Heizeinrichtung (40) über einen Trenntransformator oder eine Serienschaltung von Trenntransformatoren galvanisch vom primären Heizstromkreis entkoppelt ist.

10. Vorrichtung nach einem der Ansprüche 7 bis 9, bei der ein am Brennstabhüllrohr (14) fixierter elektrischer Anschlusskontakt (50) und eine dem Anschlusskontakt (50) zur Potentialmessung zugeordnete, im Inneren des Druckbehälters (40) angeordnete Bezugselektrode (54) mit einem außerhalb des Druckbehälters (40) positionierten Potentialmessgerät verbunden sind.

11. Vorrichtung nach Anspruch 10, bei der der Anschlusskontakt (50) an dem aus dem Druckbehälter (40) herausragenden Teilstück des Brennstabhüllrohres (14) fixiert ist.

12. Vorrichtung nach einem der Ansprüche 7 bis 11, bei der als Heizeinrichtung (40) eine auswechselbar in das Brennstabhüllrohr (14) einführbare Heizpatrone (42), vorzugsweise eine Hochleistungsheizpatrone mit einer Auslegungsheizleistung von ungefähr 75 W/cm², vorgesehen ist.

13. Vorrichtung nach einem der Ansprüche 7 bis 12, bei der zwischen der Heizpatrone (42) und dem Brennstabhüllrohr (14) ein in der Art eines Hohlzylinders oder eines Rohres gestalteter Silbereinsatz (48) angeordnet ist.

14. Vorrichtung nach einem der Ansprüche 7 bis 13, deren Druckbehälter (4) einen strömungsseitigen Einlass (30) und einen Auslass (32) für das das Brennstabhüllrohr (14) umströmende Umgebungsmedium (M) aufweist.

15. Vorrichtung nach einem der Ansprüche 7 bis 14, bei der im Inneren des Druckbehälters (4) eine Anzahl von längs dem Brennstabhüllrohr (14) verteilt angeordneten Temperaturmessfühlern (60) vorgesehen ist.

16. Vorrichtung nach einem der Ansprüche 7 bis 15, bei der die Temperaturmessfühler (60) und/oder ggf. weitere im Inneren des Druckbehälters (4) angeordnete Messfühler elektrisch gegenüber dem Druckbehälter (4) und dem Brennstabhüllrohr (14) isoliert sind.

## Claims

1. A method for testing a fuel-rod cladding tube (14), wherein the fuel-rod cladding tube (14) is partly immersed into an ambient medium (M) and is heated from inside, the electrode potential of the fuel-rod cladding tube (14) being measured as compared with a reference electrode (54) and the material properties of the fuel-rod cladding tube (14), namely its corrosion properties, being inferred from the measuring data.

2. The method of claim 1, wherein the chemical composition of the ambient medium (M) is chosen such that it is identical or similar to the composition of the cooling medium in a nuclear reactor.

3. The method of claim 1 or 2, wherein the ambient medium (M) used is an aqueous liquid into which one or more gases are introduced, which also exist or might develop in the cooling medium during operation of a nuclear reactor.

4. The method of any of claims 1 to 3, wherein the pressure and the temperature of the ambient medium (M) are adjusted such that they correspond to the operating conditions in the pressure vessel of a nuclear reactor.

5. The method of any of claims 1 to 3, wherein a flow of the ambient medium (M) is adjusted such that it reproduces the flow relationships prevailing at the fuel-rod cladding tube (14) of a nuclear reactor.

6. The method of any of claims 1 to 5, wherein the heating power of the heating device (40) heating the fuel-rod cladding tube (14) from inside is adjusted such that it corresponds to the heating power released by a nuclear fuel located inside the fuel-rod cladding tube (14), during operation of a nuclear reactor.

7. A device for measuring the electrode potential of a fuel-rod cladding tube (14)
- having a pressure vessel (4) which includes an introduction opening (12) in the vessel wall (6) and which can be filled with an ambient medium (M), the fuel-rod cladding tube (14) being introduceable through the introduction opening (12) into the pressure vessel (4),
- having a heating device arranged in the interior (16) of the fuel-rod cladding tube (14), and
- having an electrically insulating sealing body (24) arranged between the fuel-rod cladding tube (14) and the vessel wall (6).

8. The device of claim 7, wherein a Teflon insert of annular shape or formed as a hollow cylinder is provided as sealing body (24).

9. The device of claim 7 or 8, whose heating device (40) is conductively uncoupled from the primary heating-current circuit by means of an isolating transformer or a series circuit of isolating transformers.

10. The device of any of claims 7 to 9, wherein an electrical connection contact (50) fixed on the fuel-rod cladding tube (14) and a reference electrode (54) associated with the connection contact (50) for measuring the potential and arranged inside the pressure vessel (40) are connected with a potential-measuring device positioned outside the pressure vessel (40).

11. The device of claim 10, wherein the connection contact (50) is fixed on the part of the fuel-rod cladding tube (14) protruding from the pressure vessel (40).

12. The device of any of claims 7 to 11, wherein a heating cartridge (42), preferably a high-performance heating cartridge with a rated heating power of approximately 75 W/cm², which can be inserted into the fuel-rod cladding tube (14) in an exchangeable manner, is provided as heating device (40).

13. The device of any of claims 7 to 12, wherein a silver insert (48) designed in the manner of a hollow cylinder or a tube is arranged between the heating cartridge (42) and the fuel-rod cladding tube (14).

14. The device of any of claims 7 to 13, whose pressure vessel (4) includes an inlet (30) on the flow side and an outlet (32) for the ambient medium (M) flowing around the fuel-rod cladding tube (14).

15. The device of any of claims 7 to 14, wherein a number of temperature sensors (60) arranged in a distributed manner along the fuel-rod cladding tube (14) are provided inside the pressure vessel (4).

16. The device of any of claims 7 to 15, wherein the temperature sensors (60) and/or possibly further sensors arranged inside the pressure vessel (4) are electrically insulated against the pressure vessel (4) and the fuel-rod cladding tube (14).

## Revendications

1. Procédé pour tester une gaine de barre de combustible (14), dans lequel la gaine de barre de combustible (14) est partiellement immergée dans un milieu ambiant (M) et est chauffée de l'intérieur, le potentiel de l'électrode de la gaine de barre de combustible (14) étant mesuré en comparaison avec une électrode de référence (54) et les propriétés de la matière de la gaine de barre de combustible (14), à savoir ses propriétés de corrosion, étant inférées des données de mesurage.

2. Procédé selon la revendication 1, dans lequel la constitution chimique du milieu ambiant (M) est choisie de façon qu'elle est identique ou similaire à la constitution du fluide de refroidissement dans un réacteur nucléaire.

3. Procédé selon la revendication 1 ou 2, dans lequel le milieu ambiant (M) utilisé est un liquide aqueux dans lequel un ou plusieurs gaz sont introduits, qui existent ou pourraient se produire également dans le fluide de refroidissement pendant le fonctionnement d'un réacteur nucléaire.

4. Procédé selon l'une quelconque des revendications 1 à 3, dans lequel la pression et la température du milieu ambiant (M) sont réglées de façon qu'elles correspondent aux conditions de fonctionnement dans la cuve sous pression d'un réacteur nucléaire.

5. Procédé selon l'une quelconque des revendications 1 à 3, dans lequel un flux du milieu ambiant (M) est réglé de façon qu'il reproduise les relations de flux qui existent à la gaine de barre de combustible (14) d'un réacteur nucléaire.

6. Procédé selon l'une quelconque des revendications 1 à 5, dans lequel la puissance de chauffage du dispositif de chauffage (40) chauffant la gaine de barre de combustible (14) de l'intérieur est réglée de façon qu'elle corresponde au puissance de chauffage libérée par un combustible nucléaire se trouvant à l'intérieur de la gaine de barre de combustible (14), pendant le fonctionnement d'un réacteur nucléaire.

7. Dispositif pour mesurer le potentiel de l'électrode d'une gaine de barre de combustible (14)
- ayant une cuve sous pression (4) qui présente une ouverture d'introduction (12) dans la paroi (6) de la cuve et qui peut être remplie d'un milieu ambiant (M), la gaine de barre de combustible pouvant être introduite à travers l'ouverture d'introduction (12) dans la cuve sous pression (4),
- ayant un dispositif de chauffage disposé à l'intérieur (16) de la gaine de barre de combustible (14), et
- ayant un corps d'étanchéité (24) isolant électriquement, disposé entre la gaine de barre de combustible (14) et la paroi (6) de la cuve.

8. Dispositif selon la revendication 7, dans lequel un insert de Teflon, en forme d'anneau ou de cylindre creux, est prévu comme corps d'étanchéité (24).

9. Dispositif selon la revendication 7 ou 8, dont le dispositif de chauffage (40) est découplé galvaniquement du circuit de courant de chauffage primaire au moyen d'un transformateur d'isolation ou d'un montage série de transformateurs d'isolation.

10. Dispositif selon l'une quelconque des revendications 7 à 9, dans lequel un contact de raccord (50) électrique fixé à la gaine de barre de combustible (14) et une électrode de référence (54) affectée au contact de raccord (50) pour mesurer le potentiel et disposée à l'intérieur de la cuve sous pression (40) sont reliés avec un dispositif de mesurage du potentiel positionné à l'extérieur de la cuve sous pression (40).

11. Dispositif selon la revendication 10, dans lequel le contact de raccord (50) est fixé à la partie de la gaine de barre de combustible (14) qui fait saillie de la cuve sous pression (40).

12. Dispositif selon l'une quelconque des revendications 7 à 11, dans lequel une cartouche chauffante (42), de préférence une cartouche chauffante de haute capacité avec une puissance de chauffage nominale d'environ 75 W/cm², qui peut être insérée dans la gaine de barre de combustible (14) de façon échangeable, est prévue comme dispositif de chauffage (40).

13. Dispositif selon l'une quelconque des revendications 7 à 12, dans lequel un insert d'argent (48) formé de la manière d'un cylindre creux ou d'un tube est disposé entre la cartouche chauffante (42) et la gaine de barre de combustible (14).

14. Dispositif selon l'une quelconque des revendications 7 à 13, dont la cuve sous pression (4) présente une entrée (30) du côté de flux et une sortie (32) pour le milieu ambiant (M) qui entoure la gaine de barre de combustible (14).

15. Dispositif selon l'une quelconque des revendications 7 à 14, dans lequel un nombre de sondes de température (60) disposées de façon distribuée le long de la gaine de barre de combustible (14) sont prévues à l'intérieur de la cuve sous pression (4).

16. Dispositif selon l'une quelconque des revendications 7 à 15, dans lequel les sondes de température (60) et/ou éventuellement d'autres sondes disposées à l'intérieur de la cuve sous pression (4) sont isolées électriquement contre la cuve sous pression (4) et la gaine de barre de combustible (14).
